# EUROPEAN PATENT APPLICATION

(11) **EP 1 316 468 A1**
(43) Date of publication of application: **04.06.2003**
(21) Application number: 01128275.3
(22) Date of filing: 28.11.2001
(51) Int. Cl.: B60N 2/36

(54) **Seat arrangement**

(71) Applicant: Ford Global Technologies, Inc., Dearborn, Michigan 48126 (US)
(72) Inventor: Kullman, Leo, 565 91 Mullsjö (SE); Larsson, Morgan, 436 40 Askim (SE); Nygren, Harry, 423 46 Torslanda (SE)
(74) Representative: Lind, Urban

(57) **Abstract**

This invention relates to a motor vehicle folding seat arrangement (1) of a kind that has a use-position and a stow-position. The seat arrangement (1) comprises a seat cushion (2), a backrest (3) and at least one first pivotal mechanism (4) for folding of the backrest (3). The seat cushion (2) is movable between said use-position, substantially in front of said backrest (3), and said stow-position, substantially behind said at least one first pivotal mechanism (4) of said backrest (3), leaving space for forward folding of said backrest (3).

The invention also discloses a method for folding of a motor vehicle seat arrangement and a motor vehicle comprising such a seat arrangement.

## Description

### Field of the Invention

The invention relates to a motor vehicle folding seat arrangement of a kind that has a use-position and a stow-position and comprises a seat cushion, a backrest and at least one first pivotal mechanism for folding of the backrest. The invention also discloses a method for folding of a motor vehicle seat arrangement and a vehicle comprising such a seat arrangement.

### Technical Background

Folding seats of different types are present in many modern motor vehicles. The folding seat arrangement is used to accommodate a large amount of baggage and long baggage by utilizing the interior of the vehicle more effectively. Quite often the safety arrangements and the design of the prior art seats make them complicated to rearrange from a use-position to a stow-position. Such prior art seats generally require additional adjustment of neighboring equipment, such as for example a headrest and/or other seats, in order to rearrange the folding seat from a use-position to a stow-position. Many times the folding operation of such a prior art seat leads to limited comfort for passengers in neighboring seats due to the required additional adjustments.

At the same time it is desirable to provide a folding seat arrangement which allows for utilization of the most possible storing space in the motor vehicle when the seat is folded in a stow-position. However, folding seats according to prior art often occupy possible storing space. This is the case when a backrest is folded on top of a seat cushion and as a consequence the storing space. available will be limited.

It is also important, particularly for safety reasons, to provide a robust and reliable construction of a folding seat arrangement, especially when the seat is in a use-position and a passenger is occupying the seat.

### Summary of the Invention

The object of the present invention is to provide a motor vehicle folding seat arrangement that overcomes the above issues, and present a seat arrangement which is easy to fold and unfold and also safe.

A further object of the present invention is to provide a folding seat arrangement which occupies a minimum of space and thus a maximum of storing space for e.g. baggage in the motor vehicle is made available.

It is still a further object of the present invention to make available a method for folding a seat arrangement in a motor vehicle in order to achieve the above outlined advantages. These and other objects are achieved by a motor vehicle folding arrangement according to the independent claim 1. Preferred embodiments of the invention are defined in the dependent claims 2-15. A method according to the invention is also disclosed in accordance with independent claim 17. Preferred methods according to the invention are given in the ancillary dependent claims.

According to the invention there is provided a motor vehicle folding seat arrangement of a kind that has a use-position and a stow-position and comprises a seat cushion, a backrest and at least one first pivotal mechanism for folding of the backrest characterized in that the seat cushion is movable between said use-position, substantially in front of said backrest, and said stow-position, substantially behind said at least one pivotal mechanism of said backrest, leaving space for forward folding of said backrest.

The use-position is here and in the following to be understood as the position of the seat when it is in position for a person to sit in. Directions related to the function of the seat is to be understood here and in the following as being described in relation to a seat in use-position and not necessarily depending on for example how the seat is mounted in the vehicle in relation to the traveling direction.

This arrangement makes it possible to utilize a maximum of space in such a vehicle compartment when the seat or seats have been folded. The occupied height of the folding seat arrangement according to the invention when folded will be kept to a minimum and the folding of the seat arrangement is also achievable by a minimum of impact on surrounding arrangements. For safety reasons it is important that the backrest of the seat is securely fastened in the vehicle, especially when in use by a passenger. By letting the backrest be pivotal around a shaft, by said first pivotal mechanism, during movement between a use- and a stow-position a robust and reliable seat arrangement is obtained.

A stow-facility is provided for storing the seat cushion in the stow position. The stow-facility is covered by a roofage having an inner side and an outer side, said outer side being provided to serve as a baggage-placing surface in the motor vehicle. Preferably, a rear part of the backrest in the stow-position is provided to serve as a part of the baggage-placing surface. A substantially flat baggage-placing surface is obtained when the seat arrangement is resting in its stow-position. The rear part of the backrest is preferably flat and designed to form a flat surface, when folded, together with the surrounding vehicle interior

According to a preferred embodiment, said seat cushion is arranged to be guided underneath the backrest, when moved between said use-position and said stow-position. More preferably, said seat cushion is movable between said use-position and said stow-position between a pair of first pivotal mechanisms of the backrest. This arrangement allows for a safe and robust design of the seat arrangement, especially in a critical zone of the backrest that might experience high loading in extreme situations and still the seat arrangement is easily operated from a use-position to a stow-position or vice versa.

According to a preferred embodiment of the invention said seat arrangement comprises at least one guide being fixed in relation to the motor vehicle structure and connected to said seat cushion, such that said seat cushion is guided by said at least one guide between said use-position and said stow-position. More preferably, said guide is a sliding rail.

It is still a further object of the present invention to enable for a person to perform a transformation of the seat, from one position to another position, from one location in a convenient manner.

This is achieved in accordance with the invention by providing a release handle by the seat arrangement that is provided to unlatch the seat cushion in order to enable mobility of said seat cushion. Furthermore, at least one first latch is provided at one guide to hold and, when moving the seat cushion along said guide into said stow-position, automatically release the first pivotal mechanism of the backrest, for forward folding of said backrest. In accordance with a preferred embodiment said backrest comprises a headrest and a second pivotal mechanism provided to enable forward folding of said headrest. In order to allow for folding in a fluent and convenient manner said second pivotal mechanism is provided with a headrest trigger that automatically releases the headrest from a locked position when folding the backrest. Thus, a seat arrangement which is easily folded in a convenient manner from one location is provided according to the invention, said seat arrangement also having the before mentioned advantages. In order to further facilitate the folding of the seat arrangement, the seat cushion is provided with a spring load directed towards said stow-position, which after actuation of the release handle will almost automatically will drag the seat cushion in direction to the stow-position and the rest of the folding of the seat arrangement will follow.

A handle is provided at the seat cushion to enable pulling of the seat cushion from said stow-position to said use-position. By using the handle the folding seat is easily and conveniently restored to the use-position from the stow-position in a similar manner as indicated above but generally in a reverse sequence.

It is also according to the invention provided a motor vehicle having such a folding seat arrangement and with the resulting advantages related to possible baggage space, convenient folding of the seat and a safe, robust and reliable seat arrangement.

It is also according to the invention provided a method of folding a motor vehicle seat arrangement, said seat arrangement having a use-position and a stow-position and comprising a seat cushion, a backrest and a first pivotal mechanism for folding of the backrest characterized in that said seat cushion is moved from said use-position in front of the backrest to rest in said stow-position substantially behind said at least one pivotal mechanism of said backrest, whereby space is created for forward folding of said backrest.

Furthermore, according to a preferred embodiment at least one first latch, provided at said at least one guide, automatically releases the pivotal mechanism of the backrest for forward folding of said backrest, when moving said seat cushion towards said stow-position.

Preferably, a second pivotal mechanism is used to fold a headrest when folding the backrest.In accordance with a preferred method of the invention the above indicated steps are performed in a sequence.

According to a preferred method of the invention a handle at the seat cushion is provided to move said seat cushion from said stow-position to said use-position, during which motion the backrest will assume use-position.

### Brief Description of the Drawings

A currently preferred embodiment of the present invention will now be described in more detail, with reference to the accompanying drawings.

Fig. 1 is an exploded schematic perspective view of a motor vehicle folding seat according to an embodiment of the invention.

Fig. 2a is a schematic side view of a motor vehicle folding seat arrangement in a use-position according to an embodiment of the invention.

Fig. 2b is a schematic side view of a motor vehicle folding seat arrangement being folded according to the same embodiment of the invention.

Fig. 2c is a schematic side view of a motor vehicle folding seat arrangement according to the same embodiment of the invention.

Fig. 2d is a schematic side view of a motor vehicle folding seat arrangement in a stow-position according to the same embodiment of the invention.

Fig. 3 is a schematic perspective partial view of an embodiment of the invention.

Fig. 3a is a partial side view of an embodiment of the invention as indicated in Fig. 3.

Fig. 3b is a partial side view of an embodiment of the invention as indicated in Fig. 3.

Fig. 4 is an schematic perspective view of a motor vehicle folding seat arrangement according to an embodiment of the invention.

Fig. 4a is a partial side view of an embodiment of the invention as indicated in Fig. 4.

Fig. 5 is a perspective view of a motor vehicle suitable for being provided with an embodiment of the invention.

### Detailed Description of a Preferred Embodiment

A first preferred embodiment of the invention related to a motor vehicle folding seat arrangement will be described in more detail in the following with reference to the accompanying drawings.

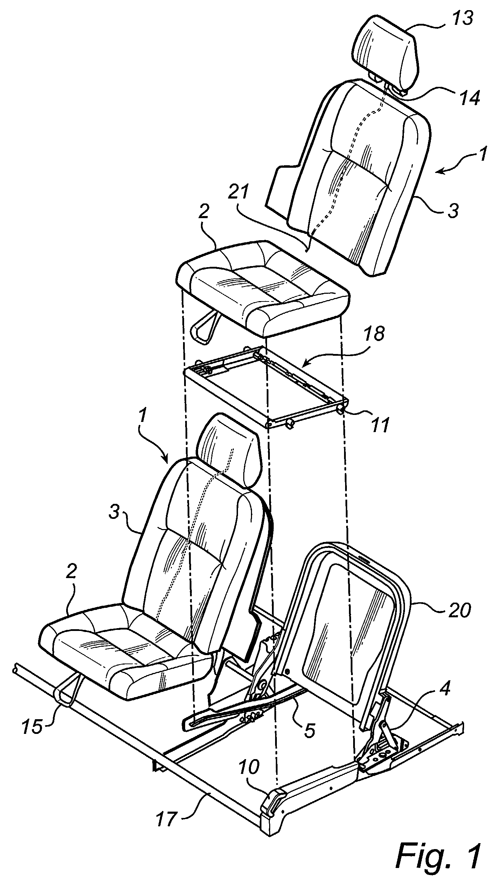

Referring now to Fig. 1, a folding seat arrangement 1 of a kind that has a use-position and a stow-position is disclosed. The use-position is here and in the following to be understood as the position of the seat when it is in position for a person to sit in. Directions related to the function of the seat is to be understood here and in the following as being described in relation to a seat in use-position and not necessarily depending on for example how the seat is mounted in the vehicle in relation to the traveling direction. The seat arrangement 1 further comprises a seat cushion 2, a backrest 3 and two pivotal mechanisms 4 for enabling folding of the backrest 3. The seat cushion 2 is movable between said use-position, and said stow-position which is situated substantially behind said backrest, leaving space for forward folding of said backrest 3.

According to a preferred embodiment of the invention the seat cushion 2 is arranged to be guided underneath the backrest 3, when moved between said use-position and said stow-position. The seat cushion is provided on a seat cushion frame 18. A guide 5 is fixed in relation to the motor vehicle structure 17 and connected to said seat cushion frame 18, such that said seat cushion 2 is guided by said at least one guide 5 between said use-position and said stow-position. The seat cushion 2 is hence movable between a pair of first pivotal mechanisms 4 holding the backrest 3. The movable connection between the seat cushion frame 18 and a guide 5 is preferably formed by a pin 11 in a groove.

Further according to the preferred embodiment, the backrest 3 comprises a headrest 13 and a second pivotal mechanism 14 which is provided to enable forward folding of said headrest 13. Said second pivotal mechanism 14 is preferably provided with a headrest trigger 21 that releases the headrest 13 from a locked position when folding the backrest 3.

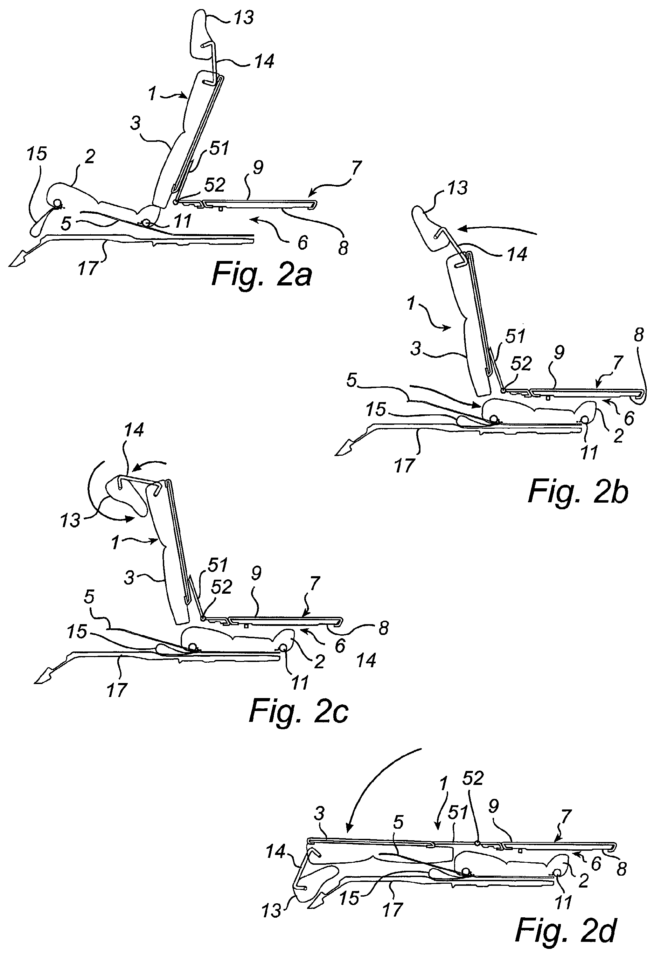

Referring now to Figs. 2a-2d the function of the preferred folding seat arrangement 1 will be described together with a method for folding the seat arrangement according to a preferred method of the invention. In Fig. 2a the seat arrangement 1 is shown in a use-position. In this use-position the seat may be adjusted for comfort reasons according to common practice.

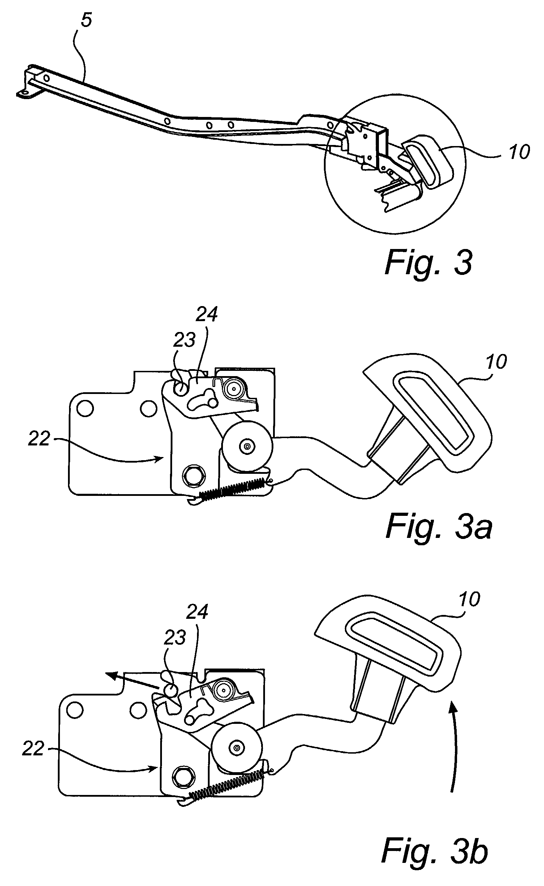

Furthermore, a release handle 10 is arranged by the seat as shown in Fig. 3. When in a latched condition the seat cushion 2 is suitably kept in a comfortable use-position. In Fig 3a an embodiment of the latching device is shown in more detail. The latch 22 comprises a claw 24, formed to grip around a pin 23. The pin 23 is preferably part of the seat cushion frame 18 or one of the pins as are denoted with numeral 11 in Fig 1. When the release handle 10 is pulled as shown in Fig. 3b the seat cushion 2 becomes unlatched and free to move.

Referring now again to Fig. 1 and Fig. 2a-2d, wherein the folding sequence of the seat arrangement 1 will be further described. The movable seat cushion 2 is conveniently moved until it reaches the stow-position behind the pivotal shaft of the backrest 3. During this motion the first latch of a first pivotal mechanism 4 is unlatched according to a preferred method. The unlatching of said first latch is preferably initiated by a pin of the seat cushion passing said latch during motion of said seat cushion. The unlatching of the first pivotal mechanism 4 causes the backrest 3 to be folded in the forward direction in relation to the seat as indicated in Fig. 2b. The headrest trigger 21 is activated in a given position of the backrest during the folding motion of the backrest 3. The headrest trigger 21 unlatches a second pivotal mechanism 14.

A stow-facility 6 is provided substantially behind the backrest 3. The seat cushion is thus in a stow-position positioned substantially behind the backrest and more preferably behind the shaft of the first pivotal mechanism as seen from the side of the seat arrangement according to a preferred embodiment of the invention.

Furthermore, the stow-facility 6 is covered by a roofage 7 having an inner side 8 and an outer side 9. The outer side 9 being provided to serve as a baggage-placing surface in the motor vehicle 16. Suitably, a rear part of the backrest 3 in the stow-position is provided to serve as a part of the baggage-placing surface. Such rear part of the backrest 3, in combination with roofage 7, will create a substantially flat baggage-placing surface when the seat arrangement 1 is resting in its stow-position. A seat arrangement 1 in a folded position is indicated in Fig. 2d. The roofage 7 preferably has a portion 51 which folds to cover this gap when the rear part of the backrest 3 is folded flat.

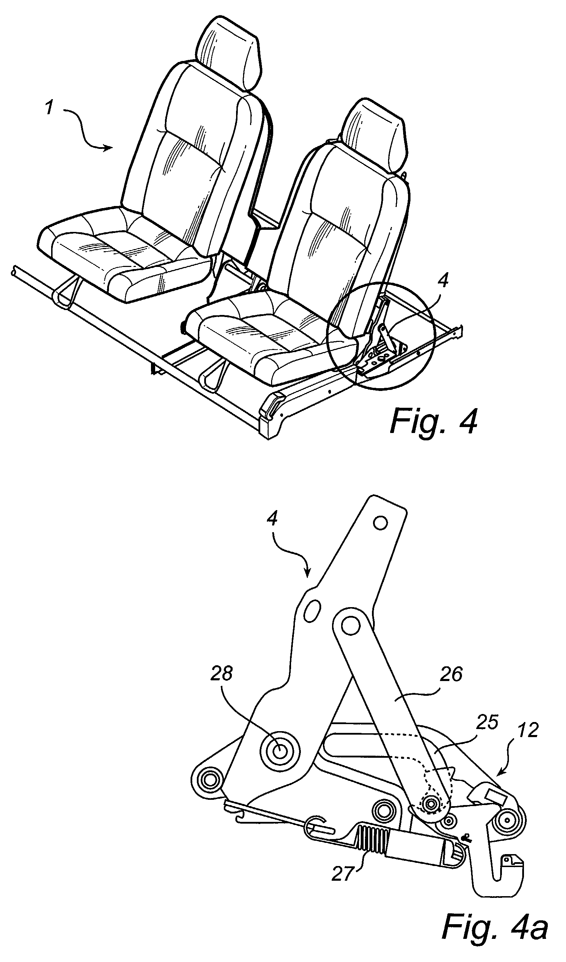

In Fig. 4 a preferred embodiment of a part of the folding seat arrangement 1 is shown in order to further illustrate the unlatching mechanism of the first pivotal mechanism 4. The backrest 3 is connected to said first pivotal mechanism 4.

With reference to Fig. 4a a preferred first pivotal mechanism 4 is disclosed. The first pivotal mechanism 4 is pivotal around a pivot shaft 28. The pivotal mechanism is supported by a support device 26 in the latched condition. The support device 26 is connected releasable to said first latch and arranged movably along a path 25 when in a released condition. When the first latch is effected preferably by the passing of the seat cushion in a given position as described previously the support device 26 is released and the folding of the seat arrangement may begin. According to a preferred embodiment a pin 11 activates the latch when the cushion is rearwardly moved and the pin 11 passes said latch. Alternatively, a trigging device (not shown) provided preferably on the cushion is used to activate the folding of the backrest when the cushion passes the pivotal mechanism 4..

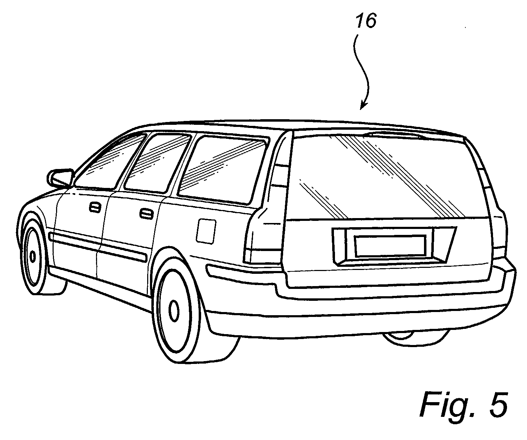

With reference made to Fig.5 a motor vehicle 16 is shown. The motor vehicle is given as an example of suitable vehicles for using the folding seat arrangement, but the seat arrangement according to the invention may be used in other vehicles as well. Examples of other still preferred vehicles are vans, SUV's, minibuses etc.

Although the present invention has been described in connection with particular embodiments thereof, it is to be understood that various modifications, alterations and adaptations may be made by those skilled in the art without departing from the spirit and scope of the invention.

According to a variant of the seat arrangement the seat cushion 2 is provided with a spring (not shown) with a spring load directed towards said stow-position. In order to facilitate the movement of the seat the spring load will pull the seat cushion towards the stow-position once the cushion 2 is released.

According to an alternative embodiment of the invention the folding and unfolding procedure of the seat arrangement is performed in a motorized manner.

A folding seat arrangement may comprise a seat for more than one person instead of the seat type shown in the accompanying drawings.

Other types of guides than sliding rails may be used, such as roller rails or tracks. Depending on the type of guide rails used, the pins 11 may be changed into wheels or another type of guide. The seat cushion 2 may be placed directly behind the backrest at a height level corresponding to that of said use-position, but the seat cushion may also be tilted and stored at angle in the stow-position. The seat cushion may also be lowered in relation to same said use-position. The guides are in such cases adapted in a corresponding manner.

It is further understood by a person skilled in the art that the folding of the seat arrangement may be performed in a motorized manner and controlled remotely.

## Claims

1. A motor vehicle folding seat arrangement (1) of a kind that has a use-position and a stow-position and comprises a seat cushion (2), a backrest (3) and at least one first pivotal mechanism (4) for folding of the backrest (3) **characterised in that** the seat cushion (2) is movable between said use-position, substantially in front of said backrest (3), and said stow-position substantially behind said at least one first pivotal mechanism (4) of said backrest (3), leaving space for forward folding of said backrest (3).

2. Folding seat arrangement (1) according to claim 1, wherein said seat cushion (2) is arranged to be guided underneath the backrest (3), when moved between said use-position and said stow-position.

3. Folding seat arrangement (1) according to any one of claims 1-2, wherein said seat cushion (2) is movable between said use-position and said stow-position between a set of first pivotal mechanisms (4) of the backrest (3).

4. Folding seat arrangement (1) according to any one of claims 1-3, wherein said seat arrangement (1) comprises at least one guide (5) being fixed in relation to the motor vehicle structure and connected to said seat cushion (2), such that said seat cushion (2) is guided by said at least one guide (5) between said use-position and said stow-position.

5. Folding seat arrangement (1) according to claim 4, wherein said guide (5) is a sliding rail.

6. Folding seat arrangement (1) according to any one of claims 1-5, wherein said seat cushion (2) in said stow-position is stored in a stow-facility (6) being provided substantially behind the backrest (3).

7. Folding seat arrangement (1) according to claim 6, wherein said stow-facility (6) is covered by a roofage (7) having an inner side (8) and an outer side (9), said outer side (9) being provided to serve as a baggage-placing surface in the motor vehicle (16).

8. Folding seat arrangement (1) according to claim 7, wherein a rear part of the backrest (3) in the stow-position is provided to serve as a part of the baggage-placing surface.

9. Folding seat arrangement (1) according to any one of claims 7-8, wherein a substantially flat baggage-placing surface is obtained when the seat arrangement (1) is resting in its stow-position.

10. Folding seat arrangement (1) according to any one of claims 1-9, wherein a release handle (10) is provided to unlatch the seat cushion (2) in order to enable mobility of said seat cushion (2).

11. Folding seat arrangement (1) according to claim 2, wherein at least one first latch (12) is provided at one guide (5) to hold and, when moving the seat cushion (2) along said guide (5) into said stow-position, release the first pivotal mechanism (4) of the backrest (3), for forward folding of said backrest (3).

12. Folding seat arrangement (1) according to any one of claims 1-11, wherein said backrest (3) comprises a headrest (13) and a second pivotal mechanism (14) provided to enable forward folding of said headrest (13).

13. Folding seat arrangement (1) according to claim 12, wherein said second pivotal mechanism (14) is provided with a headrest trigger (21) that automatically releases the headrest (13) from a locked position when folding the backrest.

14. Folding seat arrangement (1) according to any one of claims 1-13, wherein a handle (15) is provided at the seat cushion (2) to enable pulling of the seat cushion (2) from said stow-position to said use-position.

15. Folding seat arrangement (1) according to any one of claims 1-14, wherein said seat cushion (2) is provided with a spring load directed towards said stow-position.

16. Motor vehicle (16) **characterised in that** said motor vehicle (16) has a folding seat arrangement (1) according to any one of claims 1-15.

17. Method of folding a motor vehicle seat arrangement (1), said seat arrangement (1) having a use-position and a stow-position and comprising a seat cushion (2), a backrest (3) and a first pivotal mechanism (4) for folding of the backrest (3) **characterised in that** said seat cushion (2) is moved from said use-position in front of the backrest (3) to rest in said stow-position substantially behind said at least one first pivotal mechanism (4) of said backrest (3), whereby space is created for forward folding of said backrest (3).

18. Method according to claim 17, wherein said seat cushion (2) is guided by at least one guide (5) underneath the backrest (3) when moved between said use-position and said stow-position.

19. Method according to any one of claims 17-18, wherein said seat cushion (2) is moved to said use-position and said stow-position between a pair of first pivotal mechanisms (4) of the backrest (3).

20. Method according to any one of claims 17-19, wherein said seat cushion (2) in said stow-position is stored in a stow-facility (6) substantially behind the backrest (3).

21. Method according to any one of claims 17-20, wherein a release handle (10) is used for unlatching the seat cushion (2) in order to enable mobility of said seat cushion (2).

22. Method according to any one of claims 18-21, wherein at least one first latch (12), provided at said at least one guide (5), automatically releases the pivotal mechanism (4) of the backrest (3) for forward folding of said backrest (3), when moving said seat cushion (2) towards said stow-position.

23. Method according to any one of claims 17-22, wherein a second pivotal mechanism (14) is used to fold a headrest (13) when folding the backrest (3).

24. Method according to any one of claims 17-23, wherein a handle (15) at the seat cushion (2) is adapted to move said seat cushion (2) from said stow-position to said use-position during which motion the backrest (3) will assume use-position.
